Europäisches Patentamt

(19) European Patent Office

Office européen des brevets

(11) Publication number: **0 105 741**
**B1**

(12) # EUROPEAN PATENT SPECIFICATION

(45) Date of publication of patent specification: **04.03.87**

(51) Int. Cl.⁴: **B 60 N 1/00,** B 64 D 11/06

(21) Application number: **83305927.2**

(22) Date of filing: **29.09.83**

(54) **Multi-passenger vehicle seat having composite panel frame.**

(30) Priority: **30.09.82 US 429340**

(43) Date of publication of application:
**18.04.84 Bulletin 84/16**

(45) Publication of the grant of the patent:
**04.03.87 Bulletin 87/10**

(84) Designated Contracting States:
**AT BE CH DE FR GB IT LI NL SE**

(56) References cited:
**WO-A-82/03366**

(73) Proprietor: **PTC Aerospace Inc.
Route 202
Bantam Connecticut 06750 (US)**

(72) Inventor: **Brennan, Edward Joseph
Norfolk Road
Litchfield Connecticut (US)**
Inventor: **Long, William Allen
8236 Rock Hill Lane
Jacksonville Florida (US)**
Inventor: **Brunelle, Rene Joseph
12 Ivy Lane
Wollott Connecticut (US)**

(74) Representative: **Newby, John Ross et al
J.Y. & G.W. Johnson Furnival House 14/18 High
Holborn
London WC1V 6DE (GB)**

Courier Press, Leamington Spa, England.

## Description

The invention relates to vehicle seats and particularly to multi-passenger seats for aircraft. Of necessity, such seats must be capable of supporting the weight of several passengers and their luggage under acceleration loading conditions of nine "g's" or more, while still being relatively light in weight. Typically, such seats include a frame comprising front and rear laterally positioned tubular metal "stretcher" members which are joined together by fore and aft members which are generally of a forged aluminium alloy. The front and rear legs of such seats are attached at their upper ends to the stretcher members and at their lower ends to a pair of slotted tracks in the aircraft floor. The seat backs, armrests, tray tables and seat belt anchors are normally attached to the fore and aft members. The seat cushions are usually supported between the stretcher members by diaphragm panels of nylon webbing or perforated metal and typically are of a composite construction consisting of open-cell foam for comfort and closed-cell foam to provide buoyancy in water. The cushion thickness and weight for a given level of comfort and flotation support can be minimized by sandwiching the open-cell foam between relatively thin upper, lower, and peripheral layers of closed-cell foam or by having only open-cell foam in the entire centre region and closed-cell foam on the outer edges. Although improvements in materials have made it possible to greatly reduce the weight of certain components of the aforementioned seats, further improvements appear desirable in order to permit a substantial additional decrease in seat weight and thus of fuel consumption in use of the vehicle. In the field of seating for vehicles such as trains and buses, moulded plastics seats such as shown in US—A—4,088,367 have been used. However, such seats need have little strength compared to aircraft seats, since the occupants are not restrained by seat belts, and thus their accelerated weight during a crash situation would not be transferred to their seat. US—A—3,468,582 discloses a relatively heavy seat structure which incorporates a metal-skinned honeycomb panel but requires massive combined rear leg and fore and aft support members to support the panel and additional elongate metal ribs to support the seat back, arms and seat belt anchors.

The present invention seeks to provide a multi-passenger seating unit suitable for use in an aircraft, which is of substantially less weight than prior art seating units of comparable size, is of relatively simple construction and has fewer parts than prior art units (thus reducing the costs of parts inventories and maintenance) and is of such exceptional compactness that the pitch between rows of such seats can be determined virtually solely by the space required by an occupant's body. An additional advantage of preferred designs of seats in accordance with the invention is the provision of a larger vertical underseat clearance than has been known with comparable prior art seating units.

According to the present invention there is provided a multi-passenger vehicle seating unit comprising a frame panel having a laterally extending generally flat intermediate portion and a rear portion which extends generally upwardly, from said intermediate portion; a pair of front legs and a pair of rear legs attached to said frame panel at spaced locations relative to each other; said frame panel being manufactured from a composite material comprising a honeycomb core with upper and lower continuous skin surfaces bonded thereto, and seat cushion means positioned to overlie at least the intermediate portion of said frame panel and a plurality of backrests supported from said frame panel by bracket means, which is characterised in that said continuous skin surfaces are made of resin-impregnated fibrous material and have additional layers of resin-impregnated fibrous reinforcing material bonded thereto and overlying portions of said skin surfaces in spaced regions thereof to enhance the resistance of the frame panel to flexure and to reinforce the latter at locations where the bracket means and other elements of the seating unit are to be attached to it; said frame panel also including an integral front portion extending downwardly from said intermediate portion, said frame panel comprising the sole fore and aft structural frame element between said spaced locations where said front and rear legs are attached.

The reinforcement of the frame panel is preferably accomplished with relatively small pads or strips of advanced materials such as thermoset resin-impregnated graphite fibre cloth which are strategically positioned on the skin surfaces to provide additional strength and/or rigidity where it is particularly needed in order that the weight and cost of the frame panel can be kept as low as possible. The same advanced materials are also preferably used in a channel-shaped configuration to reinforce the edges of the frame panel and provide a mounting surface for elements to be attached to the frame panel. The composite frame panel, which will have a generally S-shaped configuration, performs all of the functions of the prior art fore and aft stretcher members and the fore and aft members connecting them. It also replaces the individual seat bottom and lower back support panel or diaphragm members used on prior art seats. The S-shaped frame panel is preferably made by sandwiching a flexible aluminium honeycomb core between continuous upper and lower skin surface layers of thermoset resin-impregnated fibrous material. The honeycomb panel can be pre-crushed to reduce its thickness in the areas which are adapted to receive the buttocks of the seat occupants, thus allowing a minimum distance between rows of seats. Small swatches of "advanced composite" resin-impregnated cloth reinforcing materials, such as those that contain graphite fibres, can be laid over the continuous layers of fibrous material in the skins in those areas, such as the attachment locations for the rear legs, seat belt anchors, and the seat back and arms, where additional strength and rigidity is desired. The entire composite can then be laminated and formed to its desired final shape under heat and pressure. Forming of the frame panel may be done against a die surface in either an autoclave or a vacuum bag moulding apparatus, for example. After curing is complete, excess edge material can be trimmed away and separately formed edge covering U-shaped channels of advanced composite material can be epoxy bonded to the frame panel. The edge channels increase the stiffness of the frame panel beyond that which is inherently provided by the upwardly extending rear portion and the downwardly extending front portion of the frame panel. The edge channels also provide mounting surfaces for the outer arms, the outer seat belt anchors, the end cap, an end brace and a flight attendant toe step.

The layers of reinforcement material which can be laminated to opposed portions of the upper and lower surfaces of the composite panel are preferably of sufficient lateral width to accommodate the leg positioning and leg spacing requirements of various aircraft to permit the panel to accommodate varying amounts of loading applied in a cantilever fashion to its ends for a wide range of possible leg locations. When the frame panel is ready to have legs attached, a hole positioning template can be positioned over the panel and holes in the required locations formed. Since the front of the frame panel would experience downward compressive loads in a crash situation, it is possible to attach the front legs by merely placing a plurality of fasteners between the upper surface of the composite panel and the lower surface of flange portions which extend outwardly from the upper ends of the front legs. The rear legs would be in a tension mode in a crash and without additional reinforcement, would tend to have the heads of their retaining fasteners pull out of the composite frame panel since the panel is weakened in the areas where holes are drilled in it. To prevent this, a small washer plate (e.g. of metal) can be placed on top of the composite frame panel. The washer plate can be drilled to accommodate the shanks of all of the fasteners for one of the rear legs and serves to spread the loading. Similar metal plates can be placed under the panel to back up the fasteners for seat belt anchor rings.

The bracket means are used for supporting the seat backs, tray tables and arms, and these can be of metal and include a U-shaped channel portion mounted to straddle both sides of the upper rear edge of the composite frame panel desirably in regions in which vertically extending fibrous reinforcing materials have been bonded to the frame panel. To resist flexure of the composite frame panel, all of its edges can have channel-shaped sections of resin-impregnated fibrous reinforcing material bonded to them, preferably with epoxy adhesive, after the basic panel has been formed and trimmed to size. These edge sectons seal the edges and rigidify the frame panel which in some designs must be sufficiently strong to support the passengers on the ends of the seating unit in a cantilever fashion. The reinforcing edge channels on the ends of the frame panel further rigidify the seat against rearward flexure and also provide a mounting surface for short metal tension bars which can be used to join the flat intermediate portion of the panel to the upwardly extending rear portion of the panel and provide additional restraint against flexure.

The frame panel has been described as having surface layers of thermoset resin impregnated fibrous materials on opposed sides of a flexible core honeycomb panel. Although various fibrous materials, such as fibrous glass cloth and graphite fibre cloth can be used for the skin of the panel, other materials might also be suitable. Graphite fibre cloth, although far more expensive than fibrous glass, appears to provide excellent results in achieving the required strength and stiffness in a relatively thin and lightweight panel. Two layers of fibrous material, one with its fibres arranged at 45° and 135° to the front edge of the frame panel, and the other with its fibres at 0° and 90° appear to provide good stiffness. However, it has been found useful, in order to improve the bond between the honeycomb panel core and the inner fibrous layers, to place a film-like sheet of epoxy resin between these members. The resin sheet which preferably includes a light weave of fibres, melts or softens during the lamination process so that a resin-rich strong bond will exist between the panel's skin layers and its core. The bond is enhanced since the resin contacts a portion of the side walls of the cells in the honeycomb core. We prefer to use a 15.8 mm thick honeycomb core having very thin cell walls of aluminium as compared to a 12.7 mm core with slightly thicker walls since the greater thickness of the panel can provide more stiffness at less weight. Where the skin surfaces of the panel are made of fibrous glass, the panel will weigh more than with graphite fibre and will not be as stiff. It will, accordingly, require additional areas of reinforcement, such as longitudinal strips of graphite fibre cloth, in places such as where the front seat legs are attached. With present day materials costs and projected fuel costs, the use of graphite fibres for the skins appears to be more cost effective. The improved seating unit is disclosed primarily as a lightweight, non-reclining seat which will enable passengers to be positioned in reasonable comfort in a very high density tourist class seating configuration. The concept could, however, have its many advantages adapted to other classes of seating in which a higher degree of comfort is required. Besides very substantial weight savings, the principal advantage of the unit is its ability to permit a fore and aft pitch or spacing distance between rows of seats about 38 mm less than conventional seats that have upper

rear stretcher members. Also, the underseat clearance of 314 mm is about 25 to 38 mm higher. The close pitch advantage is gained by moulding the back of a graphite epoxy laminate so that it is not only very thin but so that it is progressively curved in two directions to provide support to a passenger's back and lumbar region exactly where it is needed. By moulding the seat back shape to conform to the shape of the passenger, it is possible to provide a reasonable degree of softness and comfort with a relatively thin layer of resilient foam having a constant thickness, such as 19 mm. Furthermore, since a seated person does not need cushioning except where his torso is applying pressure to the seat, it is possible to reduce or eliminate cushioning in certain areas. For example, when a person is seated so that his lumbar region is firmly supported, no support is needed for the button region and in fact many moulded and folding seats omit a portion of the seat back so that this region may extend rearwardly of the seat back. In a preferred seating unit according to this invention, the honeycomb core is precrushed in the buttocks-receiving region before the panel is laminated. Furthermore, the seat back padding is relieved in the region below the lumbar area so that a seated passenger has the rearmost portion of his buttocks a considerable distance behind the front surface of the seat back cushion and separated only by a layer of upholstery cloth and by the thickness of the crushed panel from the knees of the passenger in the seat behind him.

Although it is expected the invention will find its greatest value in the provision of seating units for aircraft it will be seen that the claims are not limited to this use and the invention can be used in any vehicle.

The invention will now be further described by way of example, with reference to the accompanying drawings, in which:—

Figure 1 is a perspective view of one embodiment of multi-passenger seating unit in accordance with the invention with portions removed to expose part of the composite frame panel thereof;

Figure 2 is a perspective view of the complete reinforced composite frame panel;

Figure 3 is a side view on an enlarged scale illustrating the cooperation between the composite frame panel and the legs and other frame structure which support it during use;

Figure 4 is a front view of a front leg of the assembly of Figure 3;

Figure 5 is a rear view of a rear leg of the assembly of Figure 3;

Figure 6 is an enlarged scrap view showing the bracket connection between the panel, backrest and arm of the seating unit of Figure 1;

Figure 7 is a side view illustrating a pair of seats in accordance with the invention arranged at a 762 mm pitch spacing, showing their relationship to a 99th percentile adult male, the seat back of the rear seat of the pair being shown in cross-section through its centre;

Figures 8 and 9 are perspective views illustrating the front and back sides of the thin, lightweight seat back member which is integrally formed of advanced composite material; and

Figures 10—13 are cross-sectional views taken on lines 10—10, 11—11, 12—12 and 13—13 of Figure 8.

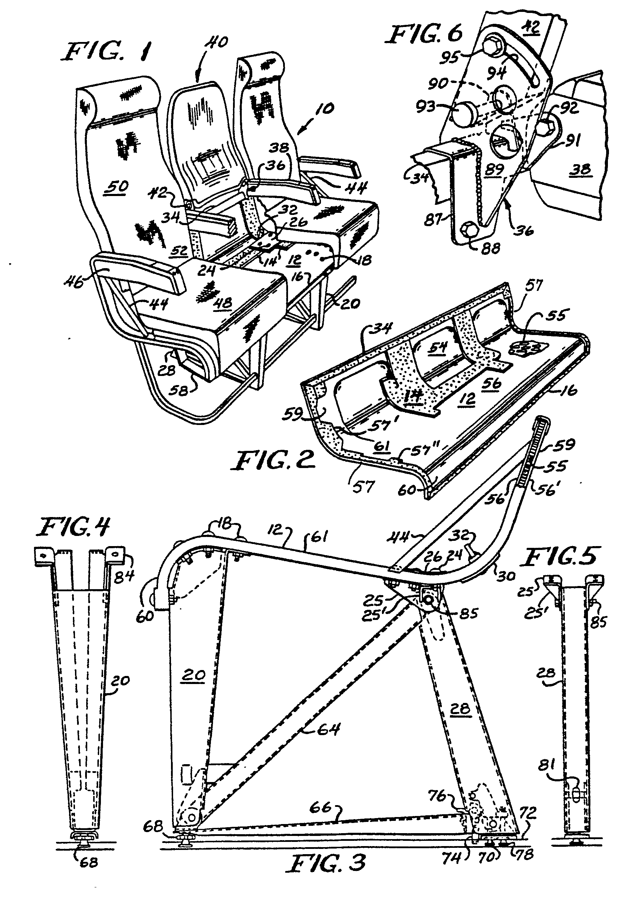

Figure 1 shows a perspective view of a triple seat position aircraft seating unit indicated generally at 10 with portions broken away to indicate the framing features of the invention. The seating unit is constructed around a preformed frame panel 12 which is constructed from a flexible core honeycomb layer 55 sandwiched between upper and lower skin surfaces 56 and 56'. The manufacture of the frame panel 12 will be described in greater detail hereafter. The panel 12 is generally S-shaped and can be seen to have reinforcement areas 14 located around the bottom and side portions of the centre seating position. These areas would be identically positioned on the top and bottom surfaces and handle the loads exerted on the frame panel 12 by the centilevered end seats, the seatbacks, the armrests and the seatbelt anchors. The lower front edge of the frame panel 12 has a reinforcement channel 16 bonded to it. Depending upon the position of the seat-retaining floor tracks in the aircraft in which the seating unit is to be used, front bolts 18 which retain front legs 20 could be positioned in apertures drilled in the frame panel 12 at laterally varying locations. The apertures would be formed using an appropriate template. A plurality of rear bolts 24 are shown as passing through a surface mounted washer plate 26 which spreads the load to the panel 12. These rear bolts 24 retain a bracket 25, shown in Figure 3, which mounts the rear legs 28. A somewhat similar washer plate 30 would be bonded to the underside of the panel 12, as shown in Figure 3, to support a seat belt anchor ring 32 and to permit the upwardly directed loads placed thereon to be spread over a substantial area of the panel 12. An upper edge reinforcing channel 34, which, like all reinforcements, is preferably formed of an advanced composite material and bonded to the panel 12, provides stiffness to the top of the panel and also helps to spread the load applied to the panel by the bracket member indicated generally at 36. The bracket 36 supports a pivotable centre arm 38 and a backrest, indicated generally at 40, which has tubular frame lower end portions 42 attached to the bracket 36. The stability of the frame panel 12 against rearward deflection is enhanced by end mounted diagonal braces 44. Channel-shaped end edge portions 57 reinforce the outer edges of the frame panel 12. A pair of brackets (not shown) which are quite similar to the brackets 36 are mounted to the reinforced upper edge portion 34 of the panel 12 to support the fixed outer arms 46. The aforementioned panel 12 and backrest structures 40 provide the complete support for seat bottom cushions 48 and back cushions 50. The back cushions are retained to the seat by means of upholstered dress covers 52 which are slipped down over the seat back and attached in the usual manner.

Referring to Figure 2, the honeycomb core composite frame panel 12 is shown as it would appear after being moulded and trimmed to size and after its channel-shaped edge portions 16, 34 and 57 are attached. A depressed region 54 is formed in the rear of the panel 12 at the location corresponding to each seat position. These regions 54 are formed by crushing the flexible core honeycomb substrate panel 55 before it is bonded or laminated to the upper and lower skin surfaces 56, 56'. Although the surface reinforcement areas 14 are shown in Figures 1 and 2 as having some thickness above the upper skin surface 56 and are also shown as being differently textured, this treatment in these Figures has merely been done for clarity. In the actual manufacture of the composite frame panel 12, a bottom layer identical to the areas 14 is placed in the mould. Then, the lower skin 56', in this case comprising two layers of a resin-impregnated "pre-preg", e.g. made of graphite fibres, is placed in the mould so that the directions of weave in one layer of the "pre-preg" is at about 45° to the weave direction in the other layer. This placement of the reinforcing layers imparts very good rigidity to the finished product. A thin, film-like layer of epoxy resin, which may include a light weave of reinforcing filaments, is then placed over the layers forming the lower skin 56'. At this point the flexible core honeycomb panel 55 is laid in the mould and, because of its flexible nature, conforms quite closely under the influence of gravity to the shape of the mould. An additional film-like layer of epoxy resin (not shown) is then placed over the core panel 55 and is covered with two additional "pre-preg" layers (again suitable arranged with their weaves at right angles) to form the upper skin 56. The upper reinforcement layer of advanced composite fibrous material forming the areas 14 is then positioned in its desired location and the entire composite is then formed under heat and pressure to produce the finished frame panel 12. During the moulding of the panel 12 the resin in the film sheets next to the core panel 55 will flow slightly into the hollow ends of the cells of the honeycomb to increase the strength of the bond between the honeycomb panel 55 and the skin layers 56, 56' and also to increase the rigidity of the composite panel 12. During the forming operation, the resin in the various layers and in the surface reinforcement areas 14 will flow and cause the surface reinforcements of the areas 14 to blend in an almost indistinguishable manner into the upper skin layer 56. Following a trimming to size of the panel 12, the separately formed channel-shaped edge portions 16, 34 and end portions 57 are attached to the panel by bonding, such as with epoxy cement. The end portions 57 are preferably formed with projecting pad portions such as those shown at 57' and 57'' in Figure 2, to provide localised reinforcement for the attachment to the frame panel 12 of elements such as seat belt anchors and a foot step element 58 for a flight attendant. As can be seen in Figures 1, 2 and 3, the panel 12 has an upwardly extending rear portion 59, a downwardly extending front portion 60 and an intermediate generally horizontal portion 61. The upwardly and downwardly extending portions 59, 60 greatly increase the ability of the panel to resist flexure when used in the cantilever fashion shown in Figure 1. As previously discussed, the particular fibrous material used for the skin layers 56, 56' can vary depending upon the cost of the various materials and the degree of strength and rigidity of the frame panel 12 which is required. Where relatively inexpensive fibrous glass materials are used, the panel would weigh more and it would usually be necessary to utilize additional regions of reinforcing material 14 and/ or a thicker honeycomb core. By using an advanced composite material for the skins, such as epoxy coated graphite fibres, the weight of the panel can be lowered. Obviously, each kg of weight that is left out of an item placed in an aircraft will result in a reduction in the operating costs of the aircraft over the life of the particular item. Also, some aircraft are quite critical in the necessity to keep weight down in a particular section, such as the tail end, of the aircraft. Thus, it might be more cost effective to make seats based on graphite fibre for one aircraft and seats based on glass fibres for another.

Figure 3 shows the relationship between the frame panel 12 and its underlying leg structure. A diagonal compression brace member 64 joins the lower end of the front leg 20 to the upper end of the rear leg 28 while a tension channel member 66 joins the bottom ends of each of the legs. A front track fitting 68 is attached to the front leg 20 and a rear track fitting 70 is attached to the rear leg 28. Each of these fittings is mounted in a slotted floor track indicated schematically by a pair of parallel lines 72. The rear fitting 70 includes a shear pin 74 which can be moved into and out of a retaining slot in the floor track by a manually actuated cam lever 76. A rear stud 78 of the fitting is preferably threaded so that it can be tightened into non-rattling engagement with the floor track by rotating its upper threaded shank end. Access for tightening is gained through an elongate access hole 81 in the rear leg.

As seen in Figure 4, the front leg 20 is formed of a box-like sheet metal construction. It is formed to be wider at its top than its bottom in order to increase its ability to resist side loads. Outwardly extending flanges 84 are welded to the leg at its top and secured by the front bolts 18 to the forward edge portion of the frame panel 12. The rear leg 28 is shown in Figure 5 and can be seen as having a relatively narrow width so as to not unnecessarily encroach on the legroom or storage area under the seats. The rear legs are mounted by bolts 85 to the brackets 25 which are supported on the underside of the panel 12 by the rear bolts 24 and the washer plate 26. Each bolt 85 also supports the respective diagonal brace member 64. Gusset portions 25' on the sides of the brackets 25 increase their rigidity.

Figure 6 shows a large scale view of the bracket member 36 which is adapted to be attached to the upper edge of the rear portion 59 of the panel 12. The bracket includes a U-shaped body portion 87 which overlies the channel-shaped edge portion 34 and is attached through the panel by a bolt assembly 88. An extended flange portion 89 cooperates with a short flange portion 90 which is spaced from it to accommodate the tubular lower end portion 42 of a backrest 40. A third outer flange member 91 cooperates with a similar flange located in a mirror image relationship on an adjacent bracket 36 (not shown) which supports one side of an adjacent seat backrest 40. A bolt assembly 92 passes through the flanges 91 and the armrest 38 so that the armrest may be pivoted to and from a vertical storage position. A mounting pin 93 supports the lower end portion 42 while a limited degree of pivotal movement of the backrest 40 is permitted by engagement of a tension bolt assembly 95 in a slot 94. Although the backrest 40 which is shown is of a non-reclinable nature, it is preferably positioned so that it is tilted back a few degrees further than a normal seat back. The purpose of the slot 94 is to permit the seat back to be pushed forward when a load of appoximately 16 kg is applied to its upper end. This feature is of assistance in a crash situation in order to allow a passenger in the seat immediately to the rear to have his head move forward with the seat back, thus reducing the "g" force of the impact. By limiting the length of the slot 94, the possibility of having a very heavy occupant forcing a seat back down too far on the back of a very light occupant ahead of him can be prevented. However, if desired, the slot 94 can be made long enough to permit movement of the seat back to a full horizontal position. In such a position, the seat can be more easily handled when being stored or moved into and out of an aircraft. Furthermore, horizontal seat backs can be crawled over by passengers to reach an emergency exit more quickly in the event of a crash.

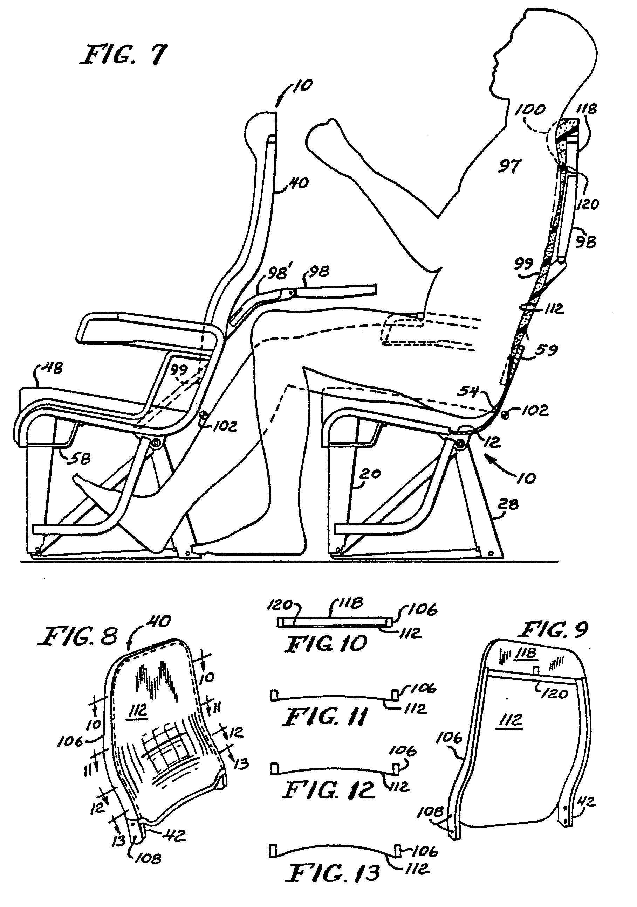

Figure 7 shows the relationship of two seating units 10 which are positioned at 762 mm pitch distance with the rear seat being shown as occupied by a 99th percentile man 97 who is 1905 mm tall and weighs 96 kg. As can be seen, even such a large person still has clearance from a tray table 98, when deployed. Furthermore, the seats have sufficient fore and aft clearance that they would have the capability of being moved another 25 mm or so closer together before the man's shin would contact the backrest 40 of the seat in front of him. Since the backrest 40 is moulded to a very special configuration so as to conform to the body of an average seat occupant, it is possible for the seat to provide good comfort even though a foam pad 99 in the seat back has a constant thickness of only about 19 mm for its entire length up to the point where a headrest pad 100 is placed. The symbols 102 represent the "seat reference point" of the respective seat structure. The seat reference point is commonly defined as the point of intersection taken on the centre line of the seat, between the front of the seat back cushion and the top of the seat bottom cushion. As can be seen in Figure 7, the theoretical seat reference point for the present seat is actually behind the seat. The point 102 for the front seat in Figure 7 appears to be spaced behind a downward projection of the pad 99 into the bottom cushion 48. However, the pad 99, on the centre line of the seat, is further back as seen in Figure 13. This advantageous location of the seat reference point 102 is achieved by the unique curvature of the backrest 40 as well as by the omission of the seat back pad 99 in the buttock area of the seat and the placement of the depressed regions 54 in the back of the frame panel 12. By moving the seat reference point 102 behind the seat, it is possible to place the seats closer together than conventional seats.

Figures 8 to 13 illustrate the special contoured construction of the backrest 40 which permits it to provide excellent support to the occupant and to allow a thin pad 99 to provide the comfort of much thicker pads on conventional seats. The backrest includes an inverted U-shaped hollow tubular frame portion 106 which is preferably formed of resin-impregnated graphite fibres moulded around a removable core. Apertures 108 in the lower ends 42 of the tubular frame 106 are adapted to be mounted on the bracket 36 in the manner described with reference to Figure 6. The thin front panel portion 112 of the backrest 40 is also preferably formed of graphite fibres and is moulded to a double curved configuration so as to have the cross-sectional profiles shown in Figures 10—13. The relatively flat surface at the top of the backrest 40 provides good support for the occupant's shoulderblade area while the large curvature at the bottom which extends to an imaginary plane which includes the rear surfaces of the frame 106, supports the occupant's lumbar and kidney regions and thereby permits padding to be eliminated behind the occupant's buttocks so that he may be positioned as far back in the seat as possible. The rigidity of the upper portion of the backrest 40 is provided by an upper back panel 118 which is preferably made of a composite material. The back panel 118 and the front panel 112 are preferably bonded to the tubular frame 106 in a compression moulding operation which preferably takes place in between matched metal dies. A forwardly extending front flange portion 120 on the lower end of the rear panel 118 is bonded to the rear surface of the front panel 112 and further increases the stability of the back member.

The special double curved shape of the backrest 40 is produced in part by shaping the tubular frame 106 with the side profile shown in Figure 8 and in the front seat in Figure 7. By offsetting the top portion of the frame to the rear of the bottom portion, additional clearance is provided for the occupant's knees. By curving the panel 112 as shown in Figures 10—13, space is made available behind the panel 112 at its bottom for arms 98' of the tray table 98 which would be attached to the ends of the pins 93 (see Figure 6). The tray table 98 then can be stored in the hollow area under the back panel 118 since the front panel 112 is not curved or only slightly curved in the area where the tray table is stored.

## Claims

1. A multi-passenger vehicle seating unit (10) comprising a frame panel (12) having a laterally extending generally flat intermediate portion (61) and a rear portion (59) which extends generally upwardly from said intermediate portion (61); a pair of front legs (20) and a pair of rear legs (28) attached to said frame panel (12) at spaced locations relative to each other; said frame panel (12) being manufactured from a composite material comprising a honeycomb core (55) with upper and lower continuous skin surfaces (56, 56') bonded thereto, and seat cushion means (48) positioned to overlie at least the intermediate portion (61) of said frame panel (12) and a plurality of backrests (40) supported from said frame panel (12) by bracket means (36), characterised in that said continuous skin surfaces (56, 56') are made of resin-impregnated fibrous material and have additional layers (14, 57', 57'') of resin-impregnated fibrous reinforcing material bonded thereto and overlying portions of said skin surfaces (56, 56') in spaced regions thereof to enhance the resistance of the frame panel (12) to flexure and to reinforce the latter at locations were the bracket means (36) and other elements of the seating unit are to be attached to it; said frame panel (12) also including an integral front portion (60) extending downwardly from said intermediate portion (61), said frame panel (12) comprising the sole fore and aft structural frame element between said spaced locations where said front and rear legs (20, 28) are attached.

2. A multi-passenger seating unit (10) as claimed in claim 1, characterised in that the resin in said additional layers (14, 57', 57'') of resin-impregnated fibrous reinforcing materials is integrally fused to the resin in the continuous skin surfaces (56, 56') which they overlie.

3. A multi-passenger seating unit (10) as claimed in claim 1 or claim 2, characterised in that the rear portion (59) of said composite frame panel (12) has its honeycomb core (55) crushed to form a plurality of depressed regions (54) in its forward skin surface (56) at spaced locations corresponding to the buttock regions of each of the seat occupants (97) when the unit (10) is occupied.

4. A multi-passenger seating unit (10) as claimed in claim 3, characterised in that a foam pad (99) overlies the forward surface of each of said backrests (40) and the upper part of the rear portion (59) of said frame panel (12), but said foam pads (99) have their lower ends spaced from said seat cushion means (48) so that over a substantial portion of their vertical extent, said depressed regions (54) are not covered by said foam pads (99) or by said seat cushion means (48).

5. A multi-passenger seating unit (10) as claimed in any preceding claim, characterised in that each of said backrests (40) comprises a panel portion (112) which is integral with a tubular, generally inverted U-shaped frame (106) which is attached at its free ends to said bracket means (36), said panel portion (112) of said backrest (40) comprising a thin sheet of resin impregnated fibrous material integrally bonded on its outer edges to the forward surface of said inverted U-shaped frame (106), said panel portion (112) being progressively curved to a lesser and lesser extent as viewed in a series of horizontal cross-sections taken through said backrest (40) in an upward direction from the bottom edge thereof, with said panel portion (112) having its vertical centre line at least approximately flush with an imaginary plane connecting the rear surfaces of said inverted U-shaped frame (106) near the bottom of said backrest (40) and at least approximately flush with an imaginary plane connecting the forward surfaces of said inverted U-shaped frame (106) near the top of said backrest (40).

6. A multi-passenger seating unit (10) as claimed in claim 5, characterised in that said backrest panel portion (112) has a foam pad (99) of uniform thickness attached to its front surface over its entire vertical extent except in its upper head rest region (100).

7. A multi-passenger seating unit (10) as claimed in claim 5 or claim 6, characterised in that said generally inverted U-shaped frame (106) has a side edge profile which extends generally vertically near its bottom and near its top but is curved rearwardly in an intermediate region so that the upper portion of the frame (106) is rearwardly offset from but generally parallel to the bottom portion (42), said offset upper portion being located so as to be above the location of the knees of an occupant (97) seated behind the seating unit (10).

8. A multi-passenger seating unit (10) as claimed in any preceding claim, characterised in that at least one of said front legs (20) and at least one of said rear legs (28) is attached to said frame panel (12) at a location which is spaced from the end (57) of said frame panel (12) by a distance such that all of one end seat position or at least most of the lateral extent of said one end seat position is supported in a cantilever fashion.

9. A multi-passenger seating unit (10) as claimed in any preceding claim, characterised in that the bracket means (36) for supporting said backrests (40) include curved slot portions (94) engaged by tension fasteners (95) on said backrests (40), said curved slot portions (94) permitting said backrests (40) to be moved forwardly when a substantial load is applied to the upper portion of their rear side.

10. A multi-passenger seating unit (10) as claimed in any preceding claim, characterised in that said front legs (20) have outwardly extending apertured flange portions (84) at their tops which are mounted to said frame panel (12) by a plurality of fasteners (18) which engage the top of said frame panel (12).

11. A multi-passenger seating unit (10) as claimed in claim 10, characterised in that said rear legs (28) are pivoted to an apertured flanged bracket (25) which is mounted to said frame panel (12) by a plurality of fasteners (24), said fasteners (24) having a reinforcing plate (26) positioned under their heads on the upper skin surface (56) of the frame panel (12).

12. A multi-passenger seating unit (10) as claimed in any preceding claim, characterised in that an inverted U-shaped seat belt anchor (32) is mounted on said frame panel (12) adjacent each seat position by a pair of threaded nuts with a reinforcing plate (30) between the nuts and the lower skin surface (56') of the frame panel (12).

13. A multi-passenger seating unit (10) as claimed in any preceding claim, characterised in that said additional layers of reinforcing material include a plurality of channel-shaped elements (16, 34, 57) overlying all of the edges of the frame panel (12) and flat cloth layers (14) overlying at least portions of the intermediate (61) and rear portions (59) of the frame panel (12) in the region surrounding the centre seat portion of the seating unit (10).

14. A multi-passenger seating unit (10) as claimed in any preceding claim, characterised in that said frame panel (12) comprises the sole lateral structural frame element between any and all of said spaced locations.

15. A multi-passenger seating unit as claimed in any preceding claim, characterised in that said seat legs (20, 28) may be attached to said frame panel (12) at varying distances from the end of said frame panel (12) to accommodate varying lateral positions of floor tracks (72) with which the seating unit (10) may be used.

**Patentansprüche**

1. Mehrpassagiersitzeinheit (10) für Beförderungsmittel, die eine Rahmenplatte (12) enthält, die einen sich seitlich erstreckenden Mittelteil (61) und einen hinteren Teil (59) hat, der sich von dem genannten Mittelteil (61) generell nach oben erstreckt sowie ein Paar Vorderbeine (20) und ein Paar Hinterbeine, die mit Abstand voneinander an der genannten Rahmenplatte (12) befestigt sind, wobei die genannte Rahmenplatte (12) aus einem Verbundwerkstoff hergestellt ist, der aus einem Waberkern (55) mit einer aufgeklebten oberen und unteren durchgehenden Hautfläche (56, 56') und Sitzpolstermitteln (48), die so angebracht sind, dass sie mindestens über dem Mittelteil (61) der Rahmenplatte (12) liegen, und mehreren Rückenlehnen (40), die durch Halterungen (36) von der genannten Platte (12) gestützt werden, besteht, dadurch gekennzeichnet, dass die genannten durchgehenden Hautflächen (56, 56') aus kunstharzgetränktem Fasermaterial hergestellt sind und daraufgeklebte zusätzliche Lagen (14, 57', 57'') kunstharzgetränkten faserigen Verstärkungsmaterials aufweisen, die über Teilen der genannten Hautflächen (56, 56') in Bereichen liegen, die in Abständen angeordnet sind, um die Biegefestigkeit der Rahmenplatte (12) zu erhöhen und diese an Stellen zu verstärken, wo die Halterungen (36) und andere Elemente der Sitzeinheit daran zu befestigen sind, wobei die genannte Platte (12) als einstückigen Bestandteil ferner einen vorderen Bereich (60) enthält, der sich von dem genannten Mittelteil (61) nach unten erstreckt, und wobei die Rahmenplatte (12) das einzige vordere und hintere strukturelle Rahmenelement zwischen den genannten auf Abstand voneinander gelegenen Stellen, wo die genannten Vorder- und Hinterbeine (20, 28) angebracht sind, darstellt.

2. Mehrpassagiersitzeinheit (10) nach Anspruch 1, dadurch gekennzeichnet, dass das Kunstharz in den genannten zusätzlichen Lagen (14, 57', 57'') kunstharzgetränkten faserigen Verstärkungsmaterials vollständig mit dem Kunstharz in den durchgehenden Hautflächen (56, 56') verschmolzen ist, über denen sie liegen.

3. Mehrpassagiersitzeinheit (10) nach Anspruch 1 oder 2, dadurch gekennzeichnet, dass der hintere Teil (59) des Wabenkerns (55) der genannten Verbundrahmenplatte (12) zusammengedrückt ist, so dass mehrere vertiefte Bereiche (54) in ihrer vorderen Hautoberfläche (56) gebildet werden, die in Abständen an Stellen liegen, die, wenn die Einheit (10) besetzt ist, mit dem Gesässbereich des jeweils darauf Sitzenden (97) übereinstimmen.

4. Mehrpassagiersitzeinheit nach Anspruch 3, dadurch gekennzeichnet, dass ein Schaumstoffpolster (99) auf jeder der genannten Rückenlehnen (40) und dem oberen Teil des hinteren Bereichs (59) der genannten Rahmenplatte (12) liegt, aber das untere Ende der genannten Schaumstoffpolster (99) einen Abstand von dem genannten Sitzpolsterungsmittel (48) hat, so dass über einen weiten Bereich ihrer senkrechten Ausdehnung die genannten vertieften Bereiche (54) nicht mit den genannten Schaumstoffpolstern (99) oder dem genannten Polsterungsmittel (48) bedeckt sind.

5. Mehrpassagiersitzeinheit (10) nach einem der vorhergehenden Ansprüche, dadurch gekennzeichnet, dass jede der genannten Rückenlehnen (40) einen Plattenbereich (112) enthält, der mit einem röhrenförmigen, im allgemeinen umgekehrt U-förmigen Rahmen (106) einstückig verbunden ist, und deren freie Enden an den genannten Halterungen (36) befestigt sind, wobei der genannte Plattenbereich (112) der genannten Rückenlehne (40) eine dünne Schicht von kunstharzgetränktem Fasermaterial enthält, das an seinen äusseren Kanten einstückig mit der Vorderfläche des genannten umgekehrt U-förmigen Rahmens (106) verklebt ist, wobei der genannte Plattenbereich zunehmend in einem immer geringeren Ausmass gekrümmt ist, wie aus einer Reihe waagerechter Querschnitte durch die genannte Rückenlehne (40), von deren Unterkante nach oben gesehen, wobei die senkrechte Mittellinie des genannten Plattenbereichs (112) zumindest näherungsweise bündig mit einer gedachten Ebene liegt, welche die hinteren Flächen des genannten umgekehrt U-förmigen Rahmens (106) in der Nähe des unteren Randes der genannten Rückenlehne (40) verbindet und zumindest näherungsweise bündig mit einer gedachten Ebene ist, welche die vorderen Flächen des genannten umgekehrt U-förmigen Rahmens (106) in der Nähe des oberen Randes der genannten Rückenlehne (40) verbindet.

6. Mehrpassagiersitzeinheit (10) nach Anspruch 5, dadurch gekennzeichnet, dass der genannte Plattenbereich (112) der Rückenlehne auf seiner Vorderfläche ein über seine gesamte senkrechte Ausdehnung ausser in seinem oberen Kopfstützenbereich (110) angebrachtes Schaumstoffpolster (99) von gleichmässiger Dicke aufweist.

7. Mehrpassagiersitzeinheit nach Anspruch 5 oder 6, dadurch gekennzeichnet, dass der genannte im allgemeinen umgekehrt U-förmige Rahmen (106) ein Seitenkantenprofil hat, das sich in seinem unteren und oberen Bereich im allgemeinen senkrecht erstreckt aber im einem Zwischenbereich nach hinten gekrümmt ist, so dass der obere Teil des Rahmens (106) gegen den unteren Teil (42) nach hinten verschoben, aber zu ihm im allgemeinen parallel ist, wobei der genannte verschobene obere Teil so liegt, dass er sich oberhalb der Lage der Knie eines hinter der Sitzeinheit (10) Sitzenden (97) befindet.

8. Mehrpassagiersitzeinheit (10) nach einem der vorhergehenden Ansprüche, dadurch gekennzeichnet, dass zumindest eines der genannten Vorderbeine (20) und zumindest eines der genannten Hinterbeine (28) an der genannten Rahmenplatte (12) in einem solchen Abstand von dessen Ende befestigt ist, dass ein Endsitz in seiner gesamten Breite oder zumindest einem erheblichen Anteil seiner Breite überhängend abgestützt ist.

9. Mehrpassagiersitzeinheit (10) nach einem der vorhergehenden Ansprüche, dadurch gekennzeichnet, dass die Halterungen (36) zur Stützung der genannten Rückenlehnen (40) gebogene Schlitzbereiche (94) enthalten, in denen gespannte Befestigungselemente (95) an genannten Rückenlehnen (40) eingerastet sind, wobei die genannten gekrümmten Schlitzbereiche (94) erlauben, dass die genannten Rückenlehnen sich nach vorne bewegen, wenn eine erhebliche Last auf den oberen Teil ihrer Rückseite ausgeübt wird.

10. Mehrpassagiersitzeinheit (10) nach einem der vorhergehenden Ansprüche, dadurch gekennzeichnet, dass die genannten Vorderbeine (20) sich nach aussen erstreckende mit Öffnungen versehene Flanschteile (84) an ihrer Oberseite haben, die an der genannten Rahmenplatte (12) mit mehreren Befestigungselementen montiert (18) sind, die den oberen Rand der genannten Rahmenplatte (12) umgreifen.

11. Mehrpassagiersitzeinheit (10) nach Anspruch 10, dadurch gekennzeichnet, dass die hinteren Beine (28) schwenkbar an einer mit Öffnungen versehenen Flanschalterung (25) befestigt sind, die mit mehreren Befestigungselementen (24) an der genannten Rahmenplatte (12) befestigt sind, wobei unter deren Köpfen eine Verstärkungsplatte (26) auf der oberen Hautfläche (56) der Rahmenplatte (12) angebracht ist.

12. Mehrpassagiersitzeinheit (10) nach einem der vorhergehenden Ansprüche, dadurch gekennzeichnet, dass eine umgekehrt U-förmige Sicherheitsgurtverankerung (32) an der genannten Rahmenplatte (12) neben jeder Sitzposition mit einem Paar Gewindemuttern mit einer Verstärkungsplatte zwischen den Muttern und der unteren Hautoberfläche (56') der Rahmenplatte (12) montiert ist.

13. Mehrpassagiersitzeinheit (10) nach einem der vorhergehenden Ansprüche, dadurch gekennzeichnet, dass zu den genannten zusätzlichen Lagen Verstärkungsmaterial mehrere kanalförmige Elemente (16, 34, 57), die über allen Kanten der Rahmenplatte (12) liegen, und flache Tuchlagen (14) gehören, die zumindest über Teilen des Mittelbereichs (61) und der hinteren Bereiche (59) der Rahmenplatte (12) im den Mittelbereich des Sitzes umgebenden Gebiet der mittleren Sitzposition der Sitzeinheit (10) liegen.

14. Mehrpassagiersitzeinheit nach einem der vorhergehenden Ansprüche, dadurch gekennzeichnet, dass die genannte Rahmenplatte (12) das einzige seitliche strukturelle Rahmenelement zwischen jeder und allen der genannten in Abständen liegenden Stellen darstellt.

15. Mehrpassagiersitzeinheit nach einem der vorhergehenden Ansprüche, dadurch gekennzeichnet, dass die Sitzbeine (2, 28) an der genannten Rahmenplatte (12) in variierenden Abständen von deren Enden so angebracht werden können, dass sie an variierende seitliche Positionen von Fussbodenschienen (72) passen, mit denen die Sitzeinheit (10) verwendet werden kann.

## Revendications

1. Sièges de véhicule multiplace (10) comprenant un panneau de carcasse (12) comportant une partie intermédiaire généralement plane (61) qui s'étend latéralement et une partie postérieure (59) qui s'étend généralement vers le haut depuis la partie intermédiaire (61), deux pieds antérieurs (20) et deux pieds postérieurs (28) attachés au panneau de carcasse (12) en des endroits espacés l'un de l'autre, le panneau de carcasse (12) étant fait d'un matériau composite comprenant une âme en nid d'abeilles (55) et des surfaces de revêtement continues supérieure et inférieure (56, 56') qui y sont collées ainsi que des coussins de sièges (48) placés de manière à recouvrir au moins la partie intermédiaire (61) du panneau de carcasse (12) et plusieurs dossiers (40) supportés par le panneau de carcasse (12) par des chapes (36), caractérisé en ce que les surfaces de revêtement continues (56, 56') sont faites d'une matière fibreuse imprégnée de résine et comportent des couches supplémentaires (14, 57', 57'') de matière de renforcement fibreuse imprégnée de résine qui y sont collées et qui recouvrent des parties des surfaces de revêtement (56, 56') situées dans des régions espacées de celles-ci pour améliorer la résistance du panneau de carcasse (12) à la flexion et pour renforcer ce panneau en des endroits où les chapes (36) et d'autres éléments du siège doivent y être attachés, le panneau de carcasse (12) comprenant aussi une partie antérieure (60) qui en fait partie intégrante et qui s'étend vers le bas depuis la partie intermédiaire (61), le panneau de carcasse (12) constituant le seul élément structurel longitudinal entre les endroits espacés où les pieds avant et arrière (20, 28) sont attachés.

2. Siège multiplace (10) suivant la revendication 1, caractérisé en ce que la résine dans les couches supplémentaires (14, 57', 57'') de matières de renforcement fibreuses imprégnées de résine est unie par fusion à la résine des surfaces de revêtement continues (56, 56') qu'elles recouvrent.

3. Siège multiplace (10) suivant la revendication 1 ou 2, caractérisé en ce que la partie postérieure (59) de l'âme en nid d'abeilles (55) du panneau de caracasse composite (12) est écrasée pour former plusieurs régions renfoncées en creux (54) dans sa surface de revêtement antérieure (56) à des endroits espacés correspondant à la région des fesses de chaque occupant (97) du siège lorsque le siège (10) est occupé.

4. Siège multiplace (10) suivant la revendication 3, caractérisé en ce qu'un rembourrage en mousse (99) recouvre la surface antérieure de chacun des dossiers (40) et la partie supérieure de la partie postérieure (59) du panneau de carcasse (12), mais les extrémités inférieures des rembourrages en mousse (99) sont espacées des coussins de sièges (48), de sorte que sur une partie substantielle de leur étendue verticale, les régions renfoncées (54) ne sont recouvertes ni par les rembourrages en mousse (99) ni par les coussins de sièges (48).

5. Siège multiplace (10) suivant l'une quelconque des revendications précédentes, caractérisé en ce que chacun des dossiers (40) comprend une partie formant panneau (112) qui est d'une pièce avec un cadre tubulaire (106) généralement en forme de U inversé qui est attaché à ses extrémités libres aux chapes (36), la partie formant panneau (112) du dossier (40) comprenant une mince feuille de matière fibreuse imprégnée de résine qui est collée solidement par ses bords extérieurs à la surface antérieure du cadre en U inversé (106), la partie formant panneau (112) étant progressivement courbée dans une mesure de moins en moins marquée si l'on considère une série de coupes horizontales du dossier (40) prises vers le haut depuis son bord inférieur, la partie (112) formant panneau étant disposée de telle façon que son axe vertical central soit au moins approximativement en ligne avec un plan imaginaire reliant les surfaces postérieures du cadre en U inversé (106) près du bas du dossier (40) et au moins approximativement en ligne avec un plan imaginaire reliant les surfaces antérieures du cadre en U inversé (106) près de l'extrémité supérieure du dossier (40).

6. Siège multiplace (10) suivant la revendication 5, caractérisé en ce que la partie formant panneau de dossier (112) comporte un rembourrage en mousse (99) d'épaisseur uniforme attaché à sa surface antérieure sur la totalité de sa hauteur, sauf dans sa région de repose-tête supérieure (100).

7. Siège multiplace (10) suivant la revendication 5 ou 6, caractérisé en ce que le cadre généralement en U inversé (106) présente un profil de bord latéral qui s'étend en substance verticalement près de sa partie inférieure et près de sa partie supérieure, mais qui est courbé vers l'arrière dans une région intermédiaire, de sorte que la partie supérieure du cadre (106) est décalée vers l'arrière de la partie inférieure (42), mais est en général parallèle à celle-ci, la partie supérieure décalée étant placée de manière à se trouver au-dessus de l'emplacement des genoux d'un occupant (97) assis derrière le siège (10).

8. Siège multiplace (10) suivant l'une quelconque des revendications précédentes, caractérisé en ce qu'au moins un des pieds avant (20) et au moins un des pieds arrière (28) est attaché au panneau de carcasse (12) à un endroit qui est espacé de l'extrémité (57) du panneau de carcasse (12) d'une distance telle que la totalité d'une position d'assise d'extrémité ou au moins la majeure partie de l'étendue latérale de cette position d'assise d'extrémité est supportée en porte à faux.

9. Siège multiplace (10) suivant l'une quelconque des revendications précédentes, caractérisé en ce que les chapes (36) destinées à supporter les dossiers (40) comprennent des boutonnières courbes (94) dans lesquelles sont engagés des organes d'assemblage sous tension (95) prévus sur les dossiers (40), les boutonnières courbes (94) permettant de faire avancer les dossiers (40) lorsqu'une charge substantielle est exercée sur la partie supérieure de leur face postérieure.

10. Siège multiplace (10) suivant l'une quelconque des revendications précédentes, caractérisé en ce que les pieds avant (20) comportent, à leurs extrémités supérieures, des pattes à trous (84) s'étendant vers l'extérieur qui sont montées sur le panneau de carcasse (12) par plusieurs organes d'assemblage (18) qui engagent la face supérieure du panneau de carcasse (12).

11. Siège multiplace (10) suivant la revendication 10, caractérisé en ce que les pieds arrière (28) sont articulés à une chape à trous (25) qui est montée sur le panneau de carcasse (12) par plusieurs organes d'assemblage (24), les organes d'assemblage (24) comportant une plaque de renforcement (26) placée en dessous de leurs têtes sur la surface de revêtement supérieure (56) du panneau de carcasse (12).

12. Siège multiplace (10) suivant l'une quelconque des revendications précédentes, caractérisé en ce qu'un organe d'ancrage de ceinture de sécurité en forme de U inversé (32) est monté sur le panneau de carcasse (12) près de chaque position d'assise par plusieurs écrous à visser, une plaque de renforcement (30) étant prévue entre les écrous et la surface du revêtement inférieur (56') du panneau de carcasse (12).

13. Siège multiplace (10) suivant l'une quelconque des revendications précédentes, caractérisé en ce que les couches supplémentaires de matière de renforcement comprennent plusieurs éléments profilés en U (16, 34, 57) qui recouvrent tous les bords du panneau de carcasse (12) et des couches de tissu planes (14) qui recouvrent au moins partiellement les parties intermédiaires (61) et postérieures (59) du panneau de carcasse (12) dans la région entourant la partie d'assise centrale du siège (10).

14. Siège multiplace (10) suivant l'une quelconque des revendications précédentes, caractérisé en ce que le panneau de carcasse (12) est le seul élément de structure latéral entre tous les endroits espacés.

15. Siège multiplace (10) suivant l'une quelconque des revendications précédentes, caractérisé en ce que les pieds (20, 28) du siège peuvent être attachés au panneau de carcasse (12) à des distance variables depuis l'extrémité du panneau de carcasse (12) pour s'adapter à diverses positions latérales des glissières de plancher (72) avec lesquelles le siège (10) peut être utilisé.

FIG. 1

FIG. 6

FIG. 2

FIG.4

FIG. 3

FIG.5

*FIG. 7*

*FIG. 8*

*FIG. 10*

*FIG. 9*

*FIG. 11*

*FIG. 12*

*FIG. 13*